(19) Europäisches Patentamt / European Patent Office / Office européen des brevets

(11) **EP 1 716 080 B2**

(12) **NOUVEAU FASCICULE DE BREVET EUROPEEN**
Après la procédure d'opposition

(45) Date de publication et mention de la décision concernant l'opposition:
**11.02.2015 Bulletin 2015/07**

(45) Mention de la délivrance du brevet:
**02.02.2011 Bulletin 2011/05**

(21) Numéro de dépôt: 04821191.6

(22) Date de dépôt: **14.12.2004**

(51) Int Cl.:
*C01F 11/18* (2006.01)    *C01F 11/00* (2006.01)
*C09C 1/02* (2006.01)

(86) Numéro de dépôt international:
**PCT/EP2004/053437**

(87) Numéro de publication internationale:
**WO 2005/070830 (04.08.2005 Gazette 2005/31)**

(54) **COMPOSITION PULVERULENTE A BASE D UN COMPOSE CALCO-MAGNESIEN**

PULVERZUSAMMENSETZUNG AUF BASIS EINER CALCIUM/MAGNESIUM-VERBINDUNG

POWDER COMPOSITION BASED ON A CALCIUM/MAGNESIUM COMPOUND

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **24.12.2003 BE 200300684**

(43) Date de publication de la demande:
**02.11.2006 Bulletin 2006/44**

(73) Titulaire: **S.A. LHOIST RECHERCHE ET DEVELOPPEMENT**
**1342 Ottignies-Louvain-La-Neuve (BE)**

(72) Inventeurs:
• **GAMBIN, Amandine**
  **F-70270 Ternuay (FR)**
• **LAUDET, Alain**
  **B-5000 Namur (BE)**
• **FRANCOISSE, Olivier**
  **B-1341 Céroux-Mousty (BE)**

(74) Mandataire: **Claeys, Pierre et al**
**Gevers**
**Intellectual Property House**
**Holidaystraat 5**
**1831 Diegem (BE)**

(56) Documents cités:
EP-A- 0 773 912     WO-A-01/40576
DE-A1- 3 713 600    DE-A1- 3 729 482
DE-A1- 19 745 191   DE-A1- 19 901 049
DE-B4- 19 811 607   DE-B4- 19 824 237
DE-C2- 3 232 081    DE-C2- 4 034 417
DE-U1- 20 011 604   JP-A- H 101 345
JP-A- H09 268 012   US-A- 3 598 624
US-A- 3 738 938     US-A- 4 051 056
US-A- 4 781 759     US-A- 5 340 558
US-A- 5 422 092     US-A- 6 136 085
US-A1- 2003 138 614

• Römpp-Lexikon Chemie; Stichwort: "Attapulgit"
• Römpp-Lexikon Chemie; Stichwort: "Perlite"
• Römpp-Lexikon Chemie; Stichwort: "Siliciumdioxid"
• Römpp-Lexikon Chemie; Stichwort: "Vermiculit"
• http://de.wikipedia.org; Stichwort: "Bentonit"
• Römpp-Lexikon Chemie; Stichwort: "Rieselhilfen"
• http://en.wikipedia.org; Stichwort "anticaking agent"
• DIN EN ISO 14688-1:2011-06
• DIN 18 550 Part 2; Janvier 1985

EP 1 716 080 B2

**Description**

La présente invention est relative à une composition à base d'un composé calco-magnésien pulvérulent.

On entend par composé calco-magnésien pulvérulent, un ensemble de particules solides, soit sous forme d'hydroxyde, soit sous forme de carbonate, répondant à la formule I ci-dessous :

$$xCa \, A \, . \, (1-x) \, [yMgA+(1-y)MgO], \qquad (I)$$

dans laquelle

A est un groupe $=(OH)_2$ ou $=CO_3$, et

x et y sont des fractions molaires où $0 < x \leq 1$ et $0 \leq y \leq 1$.

Cette matière calco-magnésienne peut évidemment contenir des impuretés, telles que la silice, l'alumine, etc. à hauteur de quelques pour-cents. D'une manière générale, la taille des particules de cette matière pulvérulente est intégralement inférieure à 1 mm et souvent inférieure à 250 $\mu$m.

Un cas particulier de composé calco-magnésien pulvérulent est la chaux éteinte, également appelée chaux hydratée (hydroxyde de calcium - $Ca(OH)_2$), laquelle peut aussi comprendre des impuretés, telles que la silice, l'alumine, l'oxyde de magnésium, le carbonate de calcium, à hauteur de quelques pour-cents et contenir de l'eau libre, à savoir non liée chimiquement au composé, jusqu'à environ 5 %.

Un tel composé est réputé pour ses difficultés d'écoulement lors du stockage, de la manutention et du transport, en particulier du transport pneumatique en phase diluée, souvent utilisé dans le cas de la chaux éteinte. Ces problèmes d'écoulement, notamment liés à la finesse des particules de la chaux hydratée, se présentent principalement sous la forme d'une agglomération des particules entre elles ou d'une accumulation de celles-ci sur les parois. De tels comportements pénalisent l'utilisation dudit composé :

-   en réduisant le débit lors du transport pneumatique par dépôt progressif du composé sur les parois, pouvant aller jusqu'au blocage des installations,
-   en perturbant la régulation lorsque le composé est utilisé comme neutralisant de composés acides,
-   en nécessitant des opérations de maintenance spécifiques et régulières à des endroits parfois peu accessibles.

Il est connu de favoriser l'écoulement des poudres au moyen d'additifs liquides organiques, notamment des surfactants [JP 08-109016, JP 09-165 216]. Cependant, l'incorporation de ces liquides organiques, parfois toxiques, à un composé minéral tel que la chaux éteinte, est souvent contraire à ses applications, en particulier dans le cas d'utilisation pour l'épuration des fumées (problème des composés organiques volatils, consécutifs à la libération des additifs organiques).

On connaît également une composition de filler contenant du carbonate de calcium et de la silice précipitée sous forme de fines particules (voir WO-01/40576).

La présente invention a pour but l'obtention d'une composition pulvérulente à base d'un composé calco-magnésien, de pureté élevée et entièrement minérale, qui limite les difficultés d'écoulement décrites ci-dessus, sans recourir à un additif organique.

Suivant l'invention on résout le problème ci-dessus, par une composition pulvérulente à base d'un composé calco-magnésien répondant à la formule I donnée précédemment, qui contient, en une quantité inférieure à 5 % en poids de ladite composition, un agent d'écoulement solide minéral sous la forme de particules présentant une taille supérieure à 125 $\mu$m, et choisi parmi le groupe constitué de la vermiculite, de la perlite et de l'attapulgite.

Par taille supérieure à une valeur donnée, on entend qu'au moins 95 % des particules auront au minimum cette taille supérieure.

De nombreuses méthodes permettent de décrire l'écoulement de produits pulvérulents comme la chaux éteinte. Ces méthodes de diagnostic reposent notamment sur l'utilisation de cellules de cisaillement, en particulier la cellule de Jenike, ou sur la détermination de l'index d'écoulement, basé sur la théorie de Carr ou encore sur la détermination d'angles de friction et de chute.

Cependant, les méthodes de diagnostic d'écoulement, citées ci-dessus, toujours liées à un écoulement sous contrainte (méthodes "statiques"), ne permettent pas de discriminer les différentes compositions pulvérulentes à base de composés calco-magnésiens dans leur comportement à l'écoulement en transport pneumatique (dynamique), à savoir lors d'un véritable écoulement de la poudre en phase diluée dans un flux d'air.

Il est donc apparu nécessaire de mettre au point une méthode de diagnostic, appropriée à l'écoulement de produits pulvérulents en transport pneumatique. Cette méthode consiste à appliquer un test dynamique d'adhérence (TDA) qui est effectué dans un dispositif spécifique.

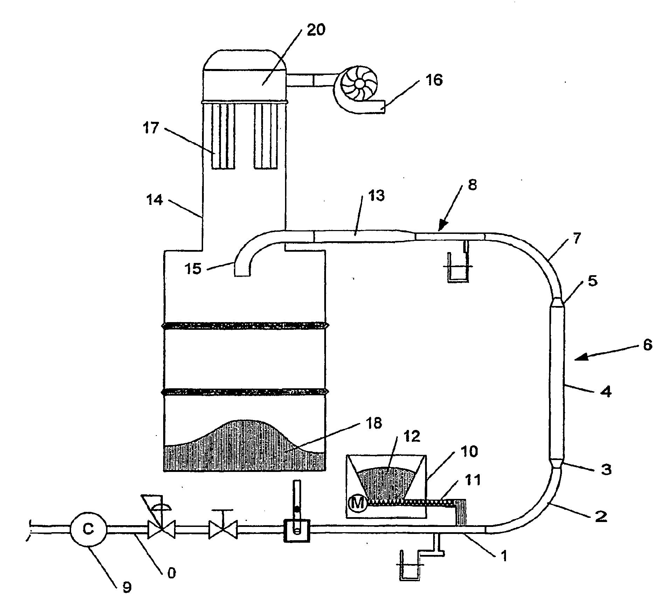

Ce dispositif est illustré sur la figure unique annexée.

Il comprend une boucle de transport de poudre, formée d'une succession de conduits rectilignes 1, 6 et 8 reliés par les coudes 2 et 7. Le conduit rectiligne 1 présente une longueur de 10 cm en aval du point d'injection de la poudre et un diamètre interne de 2,54 cm et le conduit rectiligne 8 une longueur de 27,5 cm et un diamètre interne de 2,54 cm. Le conduit rectiligne 6 est composé d'un élargissement 3 d'une longueur de 8,90 cm et d'un diamètre d'entrée de 2,54 cm, d'un manchon 4 d'une longueur de 30 cm et d'un diamètre interne de 4,25 cm et d'une réduction 5 d'une longueur de 9,85 cm et d'un diamètre de sortie de 2,54 cm. Les coudes 2 et 7 qui les relient ont un rayon de courbure de 20 cm.

Le dispositif comprend en outre une source d'air comprimé, sous la forme d'un compresseur 9 qui introduit de l'air sec comprimé dans le conduit 0. Un appareil doseur 10, muni d'une vis transporteuse 11 alimente la substance pulvérulente 12 à étudier dans le conduit 1.

La sortie du dernier conduit rectiligne 8 est reliée à un tuyau souple 13 qui pénètre dans un réservoir 14 par un coude dirigé vers le bas 15. Un ventilateur de tirage 16 d'une puissance de 1200 W et muni d'un filtre 17 d'une surface filtrante totale de 1,2 m$^2$ est agencé au sommet du réservoir 14. La substance pulvérulente qui a passé au travers des conduits s'accumule au fond du réservoir 18.

La poudre, alimentée au moyen du doseur 10, est emportée dans le circuit par le courant d'air engendré dans celui-ci. La masse totale de poudre déposée sur les différentes parois des éléments 1 à 8 est déterminée par pesée, après l'essai. Cette masse totale de poudre déposée est rapportée à l'intégrale de la masse dosée et elle est une mesure inverse de la qualité de l'écoulement de la poudre par transport pneumatique en phase diluée dans de l'air.

Les résultats du test décrit ci-dessus sont apparus cohérents avec l'expérience de la mise en oeuvre industrielle des composés calco-magnésiens pulvérulents, à savoir que ce test discrimine efficacement les produits présentant des problèmes d'écoulement dynamique de ceux qui ont un comportement satisfaisant.

On constate notamment que, toute autre chose étant égale, un composé calco-magnésien présentera un écoulement dynamique en phase diluée d'autant moins bon que la taille de ses particules sera fine.

Afin d'améliorer l'écoulement dynamique des poudres calco-magnésiennes, l'additif solide minéral a été initialement choisi parmi les composés pulvérulents réputés anti-mottants, anti-agglomérants ou "agents d'écoulement" ; on peut citer principalement le talc, la silice, la sépiolite, la vermiculite, la bentonite, la terre de diatomée, le calcaire ainsi que le carbonate, l'oxyde et l'hydroxyde de magnésium.

De façon étonnante, tous les additifs anti-agglomérants cités ci-dessus ne permettent pas systématiquement d'améliorer l'écoulement dynamique des compositions pulvérulentes à base de composés calco-magnésiens, au sens du problème posé par la présente invention. En particulier, l'ajout de talc, connu comme agent lubrifiant, n'apporte pas d'effet positif sur l'écoulement dynamique, voire même, le dégrade. La même observation est faite lorsque la sépiolite ou la bentonite est utilisée comme additif.

L'utilisation comme additif de carbonate, d'oxyde ou d'hydroxyde de magnésium ne conduit qu'à une légère amélioration des résultats du test d'écoulement dynamique, amélioration insuffisante pour résoudre les problèmes d'écoulement évoqués ci-dessus.

Par contre, d'une manière imprévisible, l'ajout selon l'invention de vermiculite, notamment "crue", de perlite ou d'attapulgite, conduit à des améliorations significatives de l'écoulement dynamique des compositions pulvérulentes à base de composés calco-magnésiens.

La composition pulvérulente à base de composé calco-magnésien selon l'invention contient l'un ou l'autre ou une combinaison des additifs minéraux parmi la vermiculite, la perlite ou l'attapulgite, à raison de moins de 5 % en poids, de préférence pas plus de 3 %, et très avantageusement pas plus de 2 % en poids de la composition. Il faut maintenir la pureté en composé calco-magnésien dans la composition selon l'invention à une valeur supérieure à 90 %, de préférence supérieure à 92 %, afin de limiter la dilution du composé calco-magnésien actif et de conserver la performance dans les applications visées.

De plus, l'additif minéral précité présentera une distribution de taille de particules plutôt grossière. En effet, contrairement à l'enseignement de documents, qui citent comme additifs de la micro-silice (fumed silicon oxide) ou des minéraux finement divisés, l'additif incorporé dans le composé calco-magnésien suivant la présente invention, devra présenter une taille de particules essentiellement supérieure à 125 $\mu$m et de préférence supérieure à 250 $\mu$m.

De façon inattendue, les compositions pulvérulentes à base de composés calco-magnésiens selon l'invention présentent un bon écoulement dynamique en phase diluée, sans limitation sur la finesse de leurs particules, contrairement aux observations faites dans le cas des composés calco-magnésiens classiques sans additif où notamment des tailles de particules inférieures à 20 $\mu$m ont pour effet un blocage rapide des installations pneumatiques. Cette propriété des compositions selon l'invention permet d'élargir leur champ d'application. En effet, un produit fin réagira mieux, notamment dans de nombreuses applications de la chaux hydratée comme l'épuration des fumées.

L'invention va maintenant être décrite plus en détail au moyen d'exemples non limitatifs.

### Exemple 1

Une chaux éteinte de production industrielle a été choisie comme composé calco-magnésien de référence. Sa pureté est de 95 % en masse de $Ca(OH)_2$; elle présente une distribution de tailles de particules jusqu'à 250 $\mu$m et une teneur en eau libre de 1%. Cette chaux est introduite dans le doseur du test d'écoulement dynamique prédécrit.

Le dispositif est alimenté en air comprimé sec (point de rosée à 3°C), préchauffé à 30°C, avec un débit de 25 $m^3$/h qui assure une vitesse initiale d'environ 14 m/s. La chaux éteinte de référence est dosée à raison de 1 kg/h. Le test prévoit que 2 kg de matière soit ainsi dosée.

A l'issue de l'expérience, la masse de chaux éteinte qui s'est accumulée sur les parois de l'ensemble des conduites est déterminée et rapportée à la masse totale dosée, à savoir 2 kg. Dans le cas de la chaux éteinte de référence, le résultat est de 65 g/kg.

Selon l'étalonnage du test dynamique de la présente invention par rapport à la qualité de l'écoulement des produits utilisés industriellement, les composés présentant comme résultat du test moins de 45 g/kg de produit accumulé sur les parois doivent être considérés comme ayant un très bon comportement à l'écoulement dynamique en phase diluée. De la même manière, un composé pour lequel le résultat du test est supérieur à 58 g/kg de produit accumulé aux parois, est considéré comme ayant un comportement à l'écoulement posant des problèmes de mise en oeuvre industrielle, notamment lors du transport pneumatique en phase diluée.

### Exemple 2

Dans cet exemple 2, on ajoute, à la même chaux éteinte qu'à l'exemple 1, des additifs qui sont des produits industriels, utilisés tels que délivrés.

On ajoute, selon l'invention, de la vermiculite "crue", à concurrence de 2 % en poids de la composition ainsi obtenue, qui fait l'objet d'un mélange afin de l'homogénéiser. La taille des particules de cet additif est supérieure à 90 $\mu$m. La composition est alors soumise au test d'écoulement dynamique, dans les mêmes conditions qu'à l'exemple 1.

Dans le cas du présent mélange de chaux éteinte et de vermiculite crue, le résultat du test est de 40 g/kg de produit accumulé sur les parois, ce qui classe cette composition parmi celle ayant un très bon comportement à l'écoulement dynamique, selon le critère cité à l'exemple 1 (moins de 45 g/kg).

De la même manière, des compositions selon l'invention ont été préparées au départ de la chaux éteinte de l'exemple 1, de façon à contenir 2% en poids, respectivement de vermiculite expansée ou exfoliée, de perlite expansée et d'attapulgite. La taille des particules de ces additifs est supérieure à 90 $\mu$m. Les résultats du test sont respectivement de 31, 38 et 39 g/kg de produit accumulé sur les parois par rapport à la masse dosée, valeurs caractéristiques des compositions présentant un très bon comportement à l'écoulement dynamique.

Afin de mettre en évidence le bénéfice des compositions pulvérulentes à base de composés calco-magnésiens selon l'invention sur la qualité de leur écoulement, il est utile d'exprimer les résultats du test d'écoulement dynamique en termes de pourcentage de réduction de la quantité accumulée sur les parois, par rapport au cas du composé calco-magnésien de référence sans additif. On obtient respectivement 38 %, 52 %, 42 % et 40 % de réduction pour les compositions contenant respectivement la vermiculite crue, la vermiculite expansée, la perlite expansée et l'attapulgite.

Par contre, si on ajoute comme additif, à concurrence de 2% en poids de la composition finale, du talc, de la sépiolite ou de la bentonite, les résultats du test sont respectivement de 64, 60, et 84 g/kg de produit accumulé sur les parois par rapport à la masse dosée. Ces additifs conduisent à l'obtention d'une formule présentant un mauvais comportement à l'écoulement dynamique (résultats > 58 g/kg) voire même un écoulement fortement dégradé par rapport au composé sans additif, dans le cas de la bentonite.

L'ensemble de ces résultats est synthétisé au tableau 1.

Tableau 1. Résultats du test d'écoulement dynamique pour la chaux éteinte de référence, des compositions à base de cette chaux, selon l'invention, et des compositions avec des additifs n'améliorant pas l'écoulement dynamique.

| Composition testée | Rapport massique de produit accumulé sur les parois [g/kg] | Pourcentage de réduction de l'accumulation aux parois par rapport à la chaux éteinte |
|---|---|---|
| Chaux éteinte de référence | 65 | - |
| Mélange à 2% en poids de vermiculite crue | 40 | 38% |
| Mélange à 2% en poids de vermiculite expansée | 32 | 52% |
| Mélange à 2% en poids de perlite expansée | 38 | 42% |

(suite)

| Composition testée | Rapport massique de produit accumulé sur les parois [g/kg] | Pourcentage de réduction de l'accumulation aux parois par rapport à la chaux éteinte |
|---|---|---|
| Mélange à 2% en poids d'attapulgite | 39 | 40% |
| Mélange à 2% en poids de talc | 64 | 2% |
| Mélange à 2% en poids de sépiolite | 60 | 8% |
| Mélange à 2% en poids de bentonite | 84 | -30% |

## Exemple 3

Dans cet exemple 3, les additifs de l'exemple 2 ont fait l'objet d'une coupure granulométrique par tamisage, de façon à ne retenir que les particules inférieures à 125 $\mu$m.

A la même chaux éteinte qu'à l'exemple 1, on ajoute, de la vermiculite "crue" < 125 $\mu$m, à concurrence de 2% en poids de la composition ainsi obtenue, qui fait l'objet d'un mélange afin de l'homogénéiser. La composition est alors soumise au test d'écoulement dynamique, dans les mêmes conditions qu'à l'exemple 1. Le résultat du test montre une très sévère détérioration de l'écoulement par rapport à la chaux sans additif avec 122 g/kg de matière collée aux parois.

De la même manière, des compositions ont été préparées au départ de la chaux éteinte de l'exemple 1, de façon à obtenir des mélanges contenant 2% en poids, respectivement de vermiculite expansée < 125 $\mu$m, d'attapulgite < 125 $\mu$m et de sable < 125 $\mu$m. Les résultats du test sont respectivement de 62, 58 et 57 g/kg de produit accumulé sur les parois par rapport à la masse dosée. Ces formules présentent donc un mauvais comportement à l'écoulement dynamique, avec respectivement 5 %, 11 % et 13 % seulement de réduction du collage aux parois.

Ces résultats démontrent le caractère critique de la distribution de tailles des particules de l'additif utilisé dans l'invention, additif qui peut perdre son efficacité s'il est trop fin.

L'ensemble des résultats de l'exemple 3 est synthétisé au tableau 2.

Tableau 2. Résultats du test d'écoulement dynamique pour la chaux éteinte de référence et dans le cas de formules à base d'additifs < 125 $\mu$m.

| Composition testée | Rapport massique de produit accumulé sur les parois [g/kg] | Pourcentage de réduction de l'accumulation aux parois par rapport à la chaux éteinte |
|---|---|---|
| Chaux éteinte de référence | 65 | - |
| Mélange à 2% en poids de vermiculite crue < 125 $\mu$m | 122 | - 88% |
| Mélange à 2% en poids de vermiculite expansée < 125 $\mu$m | 62 | 5% |
| Mélange à 2% en poids de d'attapulgite < 125 $\mu$m | 58 | 11% |
| Mélange à 2% en poids de sable < 125 $\mu$m | 57 | 13% |

## Exemple 4

Dans cet exemple 4, les additifs de l'exemple 2 ont fait l'objet d'une coupure granulométrique par tamisage, de façon à ne retenir que les particules supérieures à 250 $\mu$m.

A la même chaux éteinte qu'à l'exemple 1, on ajoute de la vermiculite "crue" > 250 $\mu$m, à concurrence de 2% en poids de la composition ainsi obtenue, qui fait l'objet d'un mélange afin de l'homogénéiser. La composition est alors soumise au test d'écoulement dynamique, dans les mêmes conditions qu'à l'exemple 1. Le résultat du test montre une nette amélioration de l'écoulement par rapport à la chaux sans additif avec seulement 39 g/kg de matière collée au paroi, soit une réduction de 41 %, par rapport à la chaux non traitée.

De la même manière, des compositions ont été préparées au départ de la chaux éteinte de l'exemple 1, de façon à obtenir des mélanges contenant 2 % en poids, respectivement de vermiculite expansée > 250 $\mu$m, d'attapulgite > 250 $\mu$m et de sable > 250 $\mu$m. Les résultats du test sont respectivement de 32, 39 et 42 g/kg de produit accumulé sur les parois par rapport à la masse dosée, signe de compositions présentant un très bon comportement à l'écoulement dynamique. On obtient respectivement 52 %, 40 % et 35 % de réduction du collage aux parois.

Ces résultats confirment le caractère déterminant de la distribution de taille des particules de l'additif.

Cependant, si on utilise comme additif à la chaux de l'exemple 1, du calcaire > 250 $\mu$m ou de la dolomie crue (carbonate mixte de calcium et de magnésium) > 250 $\mu$m, à raison de 2 % en poids du mélange final, les masses collées aux parois lors du test seront respectivement de 53 et 52 g/kg. Pour rappel, un bon comportement à l'écoulement dynamique est caractérisé par un taux de collage aux parois inférieur à 45 g/kg. Ces dernières formules ne présentent donc pas un comportement satisfaisant à l'écoulement dynamique.

Donc, le fait d'avoir des additifs, dont la taille des particules est grossière, soit supérieure à 250 $\mu$m, n'est pas une condition suffisante d'obtention d'une composition présentant un bon écoulement dynamique.

L'ensemble des résultats de l'exemple 4 est synthétisé au tableau 3.

Tableau 3. Résultats du test d'écoulement dynamique pour la chaux éteinte de référence et dans le cas de compositions à base d'additifs > 250 $\mu$m.

| Composition testée | Rapport massique de produit accumulé sur les parois [g/kg] | Pourcentage de réduction de l'accumulation aux parois par rapport à la chaux éteinte |
|---|---|---|
| Chaux éteinte de référence | 65 | - |
| Mélange à 2% en poids de vermiculite crue > 250 $\mu$m | 39 | 41% |
| Mélange à 2% en poids de vermiculite expansée > 250 $\mu$m | 32 | 52% |
| Mélange à 2% en poids de d'attapulgite > 250 $\mu$m | 39 | 40% |
| Mélange à 2% en poids de sable > 250 $\mu$m | 42 | 35% |
| Mélange à 2% en poids de calcaire > 250 um | 53 | 20% |
| Mélange à 2% en poids de dolomie crue > 250 $\mu$m | 52 | 18% |

## Exemple 5

La chaux éteinte de référence de l'exemple 1 a été sélectionnée dans un séparateur dynamique, de manière à ne conserver que les particules inférieures à 20 $\mu$m. Cette chaux éteinte sélectionnée a été testée sur le dispositif d'écoulement dynamique dans les mêmes conditions qu'à l'exemple 1. Cependant, cette chaux sélectionnée présente un moins bon écoulement que la chaux de référence, en raison de sa plus grande finesse; on n'a pu doser que 0,75 kg de chaux avant un blocage total du dispositif de test. La masse accumulée sur les parois, rapportée à la masse dosée est de 97 g/kg.

Une composition selon l'invention a été préparée au départ de cette chaux éteinte sélectionnée, de manière à obtenir respectivement une composition contenant 2% et 4% de vermiculite expansée. Dans les deux cas, il est possible de doser 2 kg de composition, sans blocage du dispositif. Par ailleurs, la masse accumulée sur les parois, rapportée à la masse dosée est de 39 g/kg pour la composition à 2% de vermiculite et de 22 g/kg pour celle à 4% de vermiculite. La réduction de masse accumulée sur les parois par rapport à la chaux éteinte sélectionnée est respectivement de 60% et 77%.

Les résultats de l'exemple 5 sont synthétisés au tableau 4.

Tableau 4. Résultats du test d'écoulement dynamique pour la chaux éteinte sélectionnée et les compositions selon l'invention à base de cette chaux.

| Composition testée | Rapport massique de produit accumulé sur les parois [g/kg] | Pourcentage de réduction de l'accumulation aux parois par rapport à la chaux éteinte |
|---|---|---|
| Chaux éteinte sélectionnée | 97 | - |
| Mélange à 2% en poids de vermiculite expansée | 39 | 60% |
| Mélange à 4% en poids de vermiculite expansée | 22 | 77% |

## Revendications

1. Composition pulvérulente à base d'un composé calco-magnésien répondant à la formule I

$$x \, Ca \, A \, . \, (1-x) \, [yMgA+(1-y)MgO], \qquad (I)$$

dans laquelle
A est un groupe =$(OH)_2$ ou =$CO_3$, et
x et y sont des fractions molaires où $0 < x \leq 1$ et $0 \leq y \leq 1$,
qui contient, en une quantité inférieure à 5 % en poids de ladite composition, un agent d'écoulement solide minéral sous la forme de particules présentant une taille supérieure à 125 $\mu$m et choisi parmi le groupe constitué de la vermiculite, de la perlite et de l'attapulgite.

2. Composition suivant la revendication 1, **caractérisée en ce qu'**elle contient l'agent d'écoulement en une quantité inférieure ou égale à 3 % en poids, de préférence de l'ordre de 2 % en poids.

3. Composition suivant l'une des revendications 1 et 2, **caractérisée en ce que** l'agent d'écoulement solide minéral présente une taille de particules supérieure à 250 $\mu$m.

4. Composition suivant l'une quelconque des revendications 1 à 3, **caractérisée en ce que** l'agent d'écoulement solide minéral est de l'attapulgite.

5. Composition suivant l'une quelconque des revendications 1 à 3, **caractérisée en ce que** l'agent d'écoulement solide minéral est de la vermiculite crue.

6. Composition suivant l'une quelconque des revendications 1 à 3, **caractérisée en ce que** l'agent d'écoulement solide minéral est de la vermiculite expansée.

7. Composition suivant l'une quelconque des revendications 1 à 3, **caractérisée en ce que** l'agent d'écoulement solide minéral est de la perlite expansée.

8. Composition suivant l'une quelconque des revendications 1 à 7, **caractérisée en ce que** le composé calco-magnésien est à un degré de pureté supérieur à 90 %, de préférence à 92 % en poids, dans la composition.

9. Composition suivant l'une quelconque des revendications 1 à 8, **caractérisée en ce que** le composé calco-magnésien présente une taille de particules inférieure à 20 $\mu$m.

## Patentansprüche

1. Pulverförmige Zusammensetzung auf Grundlage einer Kalk-Magnesium-Verbindung entsprechend der Formel I

$$x\ Ca\ A\ .\ (1-x)\ [yMgA+(1-y)MgO],\qquad (I)$$

in welcher

A eine Gruppe = $(OH)_2$ oder = $CO_3$ ist und

x und y Molfraktionen sind, wobei $0 < x \leq 1$ und $0 \leq y \leq 1$,

die, in einer Menge von weniger als 5 Gewichts% der Zusammensetzung, ein feststoffliches mineralisches Rieselhilfsmittel enthält, das in Form von Partikeln mit einer Größe von mehr als 125 $\mu$m vorliegt und das aus der Gruppe gewählt ist, welche aus Vermiculit, Perlit, und Attapulgit besteht.

2. Zusammensetzung nach Anspruch 1, **dadurch gekennzeichnet, dass** sie das Rieselhilfsmittel in einer Menge von höchstens 3 Gewichts%, vorzugsweise in der Größenordnung von 2 Gewichts% enthält.

3. Zusammensetzung nach einem der Ansprüche 1 und 2, **dadurch gekennzeichnet, dass** das feststoffliche mineralische Rieselhilfsmittel eine Partikelgröße von mehr als 250 $\mu$m aufweist.

4. Zusammensetzung nach einem beliebigen der Ansprüche 1 bis 3, **dadurch gekennzeichnet, dass** das feststoffliche mineralische Rieselhilfsmittel Attapulgit ist.

5. Zusammensetzung nach einem beliebigen der Ansprüche 1 bis 3, **dadurch gekennzeichnet, dass** das feststoffliche mineralische Rieselhilfsmittel unverarbeitetes Vermiculit ist.

6. Zusammensetzung nach einem beliebigen der Ansprüche 1 bis 3, **dadurch gekennzeichnet, dass** das feststoffliche mineralische Rieselhilfsmittel expandiertes Vermiculit ist.

7. Zusammensetzung nach einem beliebigen der Ansprüche 1 bis 3, **dadurch gekennzeichnet, dass** das feststoffliche mineralische Rieselhilfsmittel expandiertes Perlit ist.

8. Zusammensetzung nach einem beliebigen der Ansprüche 1 bis 7, **dadurch gekennzeichnet, dass** die Kalk-Magnesium-Verbindung einen Reinheitsgrad von mehr als 90 %, vorzugsweise von mehr als 92 Gewichts%, in der Zusammensetzung aufweist.

9. Zusammensetzung nach einem beliebigen der Ansprüche 1 bis 8, **dadurch gekennzeichnet, dass** die Kalk-Magnesium-Verbindung eine Partikelgröße von weniger als 20 $\mu$m aufweist.

**Claims**

1. Powdery composition based on a calco-magnesian compound complying with formula I

$$xCaA.(1-x)[yMgA+(1-y)MgO],\qquad (I)$$

in which

A is a $=(OH)_2$ or $=CO_3$ group, and

x and y are molar fractions where $0 < x \leq 1$ and $0 \leq y \leq 1$,

which contains, in a quantity of less than 5% by weight of the said composition, a mineral solid flow agent in the form of particles having a size greater than 125 $\mu$m and chosen from amongst the group consisting of vermiculite, perlite, and attapulgite,

2. Composition according to claim 1, **characterised in that** it contains the flow agent in a quantity of less than or equal to 3% by weight, preferably around 2% by weight.

3. Composition according to one of claims 1 and 2, **characterised in that** the mineral solid flow agent has a particle size greater than 250 $\mu$m.

4. Composition according to any one of claims 1 to 3, **characterised in that** the mineral solid flow agent is attapulgite.

5. Composition according to any one of claims 1 to 3, **characterised in that** the mineral solid flow agent is raw vermiculite.

6. Composition according to any one of claims 1 to 3, **characterised in that** the mineral solid flow agent is expanded vermiculite.

7. Composition according to any one of claims 1 to 3, **characterised in that** the mineral solid flow agent is expanded perlite.

8. Composition according to any one of claims 1 to 7, **characterised in that** the calco-magnesian compound is at a degree of purity greater than 90%, preferably 92% by weight, in the composition.

9. Composition according to any one of claims 1 to 8, **characterised in that** the calco-magnesian compound has a particle size of less than 20 $\mu$m.

**EP 1 716 080 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 8109016 A
- JP 9165216 A

- WO 0140576 A